# FASCICULE DE BREVET EUROPEEN

(11) **EP 3 221 132 B1**
(45) Date de publication et mention de la délivrance du brevet: **22.03.2023**
(21) Numéro de dépôt: 15798044.2
(22) Date de dépôt: 19.11.2015
(51) Int. Cl.: B29C 70/88, B64C 1/06, B64C 1/00, B29K 105/24

(54) **DISPOSITIF CONDUCTEUR DESTINE A ETRE MONTE EN SURFACE DES PIECES EN MATERIAUX COMPOSITES**
LEITENDE VORRICHTUNG ZUR MONTAGE AUF DER OBERFLÄCHE VON TEILEN AUS VERBUNDSTOFF
CONDUCTIVE DEVICE INTENDED TO BE MOUNTED ON THE SURFACE OF PARTS MADE OF COMPOSITE MATERIALS

(30) Priorité: 21.11.2014 FR 1461289
(43) Date de publication de la demande: 27.09.2017
(73) Titulaire: AIRBUS (SAS), 31700 Blagnac (FR)
(72) Inventeur: MESNAGE, Didier, 92210 Saint Cloud (FR); PELEGRIN, Thierry, 78220 Viroflay (FR)
(74) Mandataire: Jardel, Marc Henry Philippe
(86) Numéro de dépôt international: PCT/EP2015/077122
(87) Numéro de publication internationale: WO 2016/079247

(56) Documents cités:
- FR-A- 1 544 107
- FR-A1- 2 909 919
- US-A1- 2010 124 659

## Description

L'invention se rapporte au domaine général des moyens permettant d'intégrer à la surface de pièces ou structures en matériaux composite des éléments conducteurs tels que des câbles, des tresses métalliques ou des bandes de clinquant métallique, afin de réaliser des liaisons électriques.

Elle se rapporte également au domaine du contrôle d'intégrité de telles structures et de la détection de dommages consécutifs à des chocs appliqué à leur surface.

On assiste de nos jours à une intégration de plus en plus importante de matériaux non métalliques (matériaux composites, plastiques...) dans certaines structures, des structures d'éléments d'aéronefs par exemple. L'emploi de tels matériaux a pour objet de réduire la masse de telles structures ainsi que leur coût de fabrication par rapport à des structures similaires réalisées en métal.

Cependant, cette substitution de matériaux engendre des problèmes liés à la faible conductivité électrique des matériaux composites utilisés, ou même à leur absence de conductivité.

Par suite, de tels matériaux ne permettent pas d'assurer une conductivité électrique suffisante permettant de réaliser des liaisons électriques assurant des fonctions telles que le retour de courant dans un aéronef. Pour pallier cette déficience fonctionnelle, on est généralement contraint de prévoir l'installation à la surface de la structure composite considérée, de conducteurs, tels que décrits dans le document FR1 544 107A, ainsi que d'éléments assurant la fixation de ces conducteurs à la structure et l'interconnexion de ces conducteurs avec ceux portés par des structures voisines.

Cependant une telle solution pénalise l'équipement auquel est intégrée la structure tant en termes de masse, que d'encombrement ou de temps de réalisation. Ces inconvénients prennent une importance particulière s'agissant de structures d'aéronefs.

En outre, l'assemblage à une structure en matériau composite d'un élément électriquement conducteur standard, tel qu'un conducteur monolithique comme une bande ou un fil métallique, ou encore qu'un conducteur formé d'un arrangement monodimensionnel de conducteurs comme par exemple un câble électrique multibrins, peut en outre être à l'origine de contraintes mécaniques imposées à l'élément conducteur. Ces contraintes sont notamment dues aux dilatations différentielles qui apparaissent au niveau des matériaux constituant les différents éléments assemblés lorsque la structure est soumise à des variations de température importantes. C'est par exemple le cas pour les structures d'aéronefs civils qui sont soumises à des températures pouvant aller de -45°C à +70°C, ou encore pour des structures de lanceurs spatiaux qui sont soumises à des températures pouvant aller de -60°C à +200°C. Elles sont encore dues, dans une moindre mesure, à la mise en place de conducteurs sur des structures n'ayant pas nécessairement des formes planes.

Par ailleurs, cette substitution de matériaux engendre également des problèmes liés au contrôle d'intégrité des structures considérées. En effet, lorsqu'une structure en matériau composite subit un impact "basse énergie", consécutif à la chute d'un outil, par exemple, les dommages internes causés par le choc peuvent réduire significativement les performances mécaniques de cette dernière, alors même que la détection de ces dommages par simple inspection visuelle est quasiment impossible, contrairement au cas d'une structure métallique.

Or, il n'existe à ce jour aucune solution connue permettant d'intégrer directement des éléments conducteurs de courant à une structure composite en limitant les contraintes mécaniques imposées auxdits conducteurs, contraintes générées par la rétraction ou l'étirement de la structure composite lorsqu'elle est sollicitée thermiquement et permettant en même temps de constater par simple inspection visuelle la présence éventuelle d'une zone d'impact sur la surface de la structure.

De plus, la résistance à l'impact des éléments de structure en matériau composite est prise en compte par les bureaux d'études, mais conduit à un surdimensionnement de la structure par rapport au simple besoin de la tenue mécanique. Ce surdimensionnement, qui a pour but de renforcer la résistance à un impact de ces éléments de structure, ne permet pas de détecter visuellement à coup sûr un impact à basse énergie pouvant avoir endommagé l'élément de structure concerné.

Le présent concept vise à pallier ces inconvénients.

Un but de l'invention est donc de proposer une solution permettant de monter un élément conducteur à la surface d'une structure non conductrice sans que ce montage n'occasionne les inconvénients précités.

A cet effet l'invention a pour objet un dispositif conducteur pour la mise en place d'une liaison électrique à la surface d'une structure en matériau composite selon la revendication 1.

Selon l'invention, ces différents éléments sont agencés l'un par rapport à l'autre de telle façon que la longueur de l'élément conducteur puisse varier en fonction des variations de longueur pouvant affecter la couche d'interface et la couche protectrice.

Selon diverses dispositions éventuellement utilisées en conjonction, le dispositif selon l'invention peut présenter diverses caractéristiques complémentaires. Ainsi :
Selon une caractéristique du dispositif selon l'invention, la couche de protection est constituée par une enveloppe recouvrant la partie du dispositif en contact avec le milieu extérieur, ladite enveloppe définissant avec la couche d'interface un espace interne dans lequel l'élément conducteur est logé.

Selon une autre caractéristique, la couche de protection est réalisée en matériau composite de façon à présenter, en cas d'impact de basse énergie, une déformation visible par un observateur dans la zone de l'impact.

Selon une autre caractéristique, l'élément conducteur est une tresse métallique.

Selon une autre caractéristique, l'élément conducteur est ensemble de lames de matériau clinquant surperposées.

Selon l'invention, la couche d'interface et la couche de protection étant réalisées en matériau composite, la fabrication du dispositif comporte une opération de prépolymérisation, de sorte que le dispositif se présente en fin de fabrication comme un produit souple semi-fini dont la polymérisation totale peut être réalisée après montage du dispositif sur la structure en matériau composite considérée.

Selon une autre caractéristique, la couche d'interface étant réalisée en élastomère, la fabrication du dispositif comporte une opération de vulcanisation, de sorte que le dispositif se présente en fin de fabrication comme un produit souple dont le montage sur la structure en matériau composite considérée peut être réalisé un moyen d'assemblage approprié.

L'invention permet de faire circuler un signal ou un courant électrique au plus près de la structure concernée, tout en assurant une révélation des impacts et limite les contraintes mécaniques générées lors de sollicitations thermomécanique ou d'installation sur structure non plane. Elle s'applique avantageusement à toute pièce composite ou plastique et plus particulièrement aux éléments constitutifs d'aéronefs ou de lanceurs.

Les caractéristiques et avantages de l'invention seront mieux appréciés grâce à la description qui suit, description qui s'appuie sur les figures annexées qui présentent:
- la figure1, une vue longitudinale de dessus d'un exemple de mise en oeuvre du dispositif selon l'invention;
- la figure 2, une vue latérale en perspective de l'exemple de mise en oeuvre de la figure 1 ;
- la figure 3, une vue partielle détaillée du dispositif selon l'invention selon une première forme de réalisation;
- la figure 4, une vue partielle détaillée du dispositif selon l'invention selon une seconde forme de réalisation;
- la figure 5, une vue en perspective du dispositif selon l'invention selon la forme de réalisation de la figure 4, sur laquelle le revêtement de protection est partiellement découpé longitudinalement;
- la figure 6, une illustration schématique des propriétés structurelles du dispositif selon l'invention selon la forme de réalisation des figures 4 et 5;

Le dispositif 11 selon l'invention se présente sous la forme d'un semi produit constitué des éléments suivants
- Un élément conducteur 12 de section donnée,
- Une couche 13 d'un matériau d'interface isolant sur laquelle l'élément conducteur 12 est placé;
- un revêtement de surface 14 formant une protection, couvrant la partie de la surface externe du dispositif 11 en contact direct avec le milieu extérieur.

L'ensemble se présente sous l'aspect d'une bande conductrice présentant une épaisseur faible par rapport à sa longueur, épaisseur déterminée principalement par la section de l'élément conducteur 12.

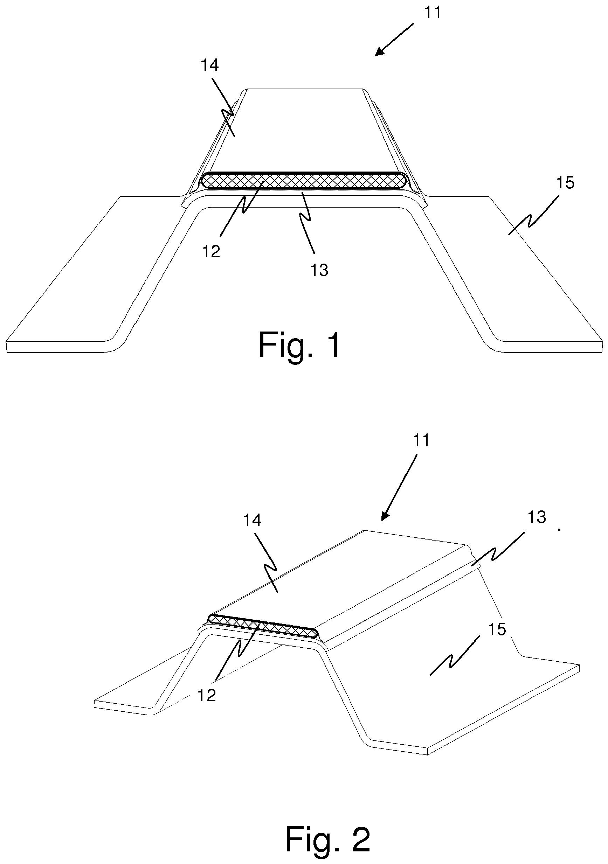

Par semi produit on entend ici que le dispositif 11 n'a pas pour vocation d'être utilisé seul mais plutôt, comme illustré par les figures 1 et 2, intégré à un élément structural support 15, dont il complète les fonctionnalités, d'un point de vue électrique essentiellement. L'élément structural 15 est par exemple un élément en matériau composite tel qu'un élément de structure d'aéronef par exemple.

La face de la couche d'interface 13 du dispositif 11 destinée à être fixée sur la structure composite 15, est configurée de façon à ce que, une fois réalisé, le dispositif 11 selon l'invention puisse être fixé à la surface d'une structure composite 15 par tout moyen approprié, par collage à froid ou à chaud sur la structure 15 déjà fabriquée ou bien par intégration en surface, lors de la fabrication de cette structure.

Selon l'invention l'élément conducteur est un élément métallique de longueur importante comparée à sa section, configuré et agencé de façon à pouvoir supporter sans dommage les contraintes mécaniques qu'il est amené à subir du fait de son allongement ou de sa contraction consécutifs aux variations de températures subies.

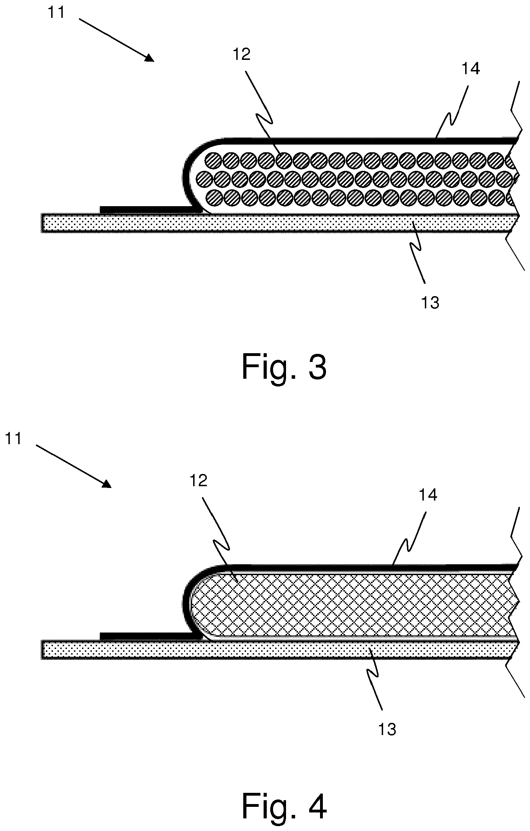

Dans ce but, il est préférentiellement constitué par une tresse métallique comme illustré par la figure 4 ou par un conducteur formé d'une superposition de lames de clinquant métallique ou encore par une juxtaposition de fils conducteurs, comme illustré par la figure 3. Cependant, il peut alternativement être constitué par d'autres éléments électriquement conducteurs tels qu'un câble électrique multibrins par exemple (cuivre, aluminium...) agencé à cet effet sur la couche d'interface 13.

La couche 13 de matériau d'interface permet à la fois de réaliser la liaison du dispositif 11 à la structure 15 et de réaliser l'isolation de l'élément conducteur 12, la tresse ou le câble, du matériau composite, pour éviter les éventuels problèmes de couplage galvanique pouvant survenir entre le matériau composite, un matériau à base de fibres de carbone notamment, et le matériau constituant l'élément conducteur 12, l'aluminium notamment.

La couche de matériau d'interface permet en outre avantageusement de séparer le conducteur 12 formant le dispositif 11 d'un autre conducteur pouvant se trouver à proximité ou croisant son chemin et par suite de protéger le conducteur 12 d'éléments perturbateurs et d'assurer le maintien d'une compatibilité électromagnétique (CEM) avec les éléments environnants.

Selon la nature et les propriétés mécaniques du matériau composite formant la structure 15, la couche 13 de matériau d'interface peut être constituée d'un matériau élastomère présentant des caractéristiques mécanique et/ou de comportement en température données ou, alternativement, d'une ou plusieurs couches d'un matériau composite choisi pour ses caractéristiques d'isolation électrique ou encore pour sa similitude de comportement en température avec le matériau composite constituant la structure 15 sur laquelle le dispositif 11 est monté.

La couche 14 de protection permet, quant à elle, de protéger l'élément conducteur 12 des agressions diverses commises par l'environnement extérieur (abrasion, corrosion, etc..).

Par suite, selon le mode de réalisation considéré, la couche de protection 14 peut consister, comme l'illustrent plus particulièrement les vues partielles des figures 3 et 4, en un réel revêtement en matériau élastomère ou en matériau composite qui définit avec la couche d'interface 13 un espace dans lequel l'élément conducteur est logé de façon telle qu'il peut subir sans contrainte un accroissement de longueur ou un rétrécissement.

Dans le cadre de la figure 3, l'élément conducteur est constitué d'une pluralité de fils disposés dans l'espace délimité par la couche de revêtement 14 et la couche d'interface 13.

Dans le cas de la figure 4 qui constitue un mode de réalisation préféré du dispositif selon l'invention, l'élément conducteur 12 est constitué par une tresse métallique,

Alternativement, la couche de revêtement 14 peut consister en un simple traitement chimique de surface (dépôt ou vernis) du matériau constituant l'élément conducteur 12, ce dernier étant alors fixé à la couche d'interface 13 par sa face en contact avec cette dernière.

La couche 14 de revêtement de surface peut par ailleurs être choisie pour certains types d'applications de façon à permettre, de par sa nature et son épaisseur, de révéler les impacts de chocs ayant pu se produire au cours de l'utilisation de la structure 15. Dans ce cas, la couche 14 de revêtement est réalisée dans un matériau capable de se déformer dans la zone d'impact (marquage de l'impact sur la surface), consécutivement à un choc, un choc de faible énergie cinétique notamment. A cet effet, elle peut alors être constituée d'une couche relativement fine de matériau rigide stratifié, un pli de verre ou de matériau composite enduit de résine par exemple.

Il est à noter que la connexion de l'élément conducteur 12, tresse, lames de clinquant ou câble avec d'autre éléments électriques peut avantageusement être réalisée avec des connecteurs existants, ce qui permettra de s'adapter aux matériaux (aluminium, cuivre....), à l'environnement (certifications, connectique existante...) et aux besoins

### (section variable en fonction de l'intensité du courant...)

Tel qu'il est décrit dans le texte qui précède, le dispositif selon l'invention présente de nombreux avantages. Ainsi:
- Il permet d'éliminer les éléments de fixation nécessaires au maintien d'un conducteur à la surface de la structure 15 considérée, ce qui permet avantageusement de libérer de l'espace, et de réaliser des gains de masse et de temps d'installation. La suppression des éléments de maintien du conducteur 12 sur la structure porteuse permet avantageusement de réduire de manière importante, pour toute structure fabriquée et équipée, le nombre de références à gérer en matière de fixations de conducteurs.
- il permet également de limiter les contraintes mécaniques pouvant être imposées à l'élément conducteur 12 par la structure composite 15 à laquelle il est fixé, en permettant notamment à l'élément conducteur 12 de s'allonger ou de se rétracter en fonction des variations de température, indépendamment des mouvements de contraction ou d'expansion suivis par la structure composite 15 sous l'action des mêmes variations de température, ou encore en fonction de contraintes mécaniques liées en particulier à la mise en place du dispositif sur la structure en matériau composite 15. La limitation des contraintes mécaniques imposées au conducteur 12 est ici avantageusement rendue possible en jouant, selon la structure de l'élément conducteur, en particulier sur la flexibilité de la tresse 41 ou sur le glissement des différents fils 31 ou celui des lames de clinquants superposées entre elles, ainsi que sur l'agencement de l'élément conducteur 12 au sein du dispositif.
- Il permet encore, dans le cas où la couche de revêtement 14 est fabriquée dans cette intention (couche en matériau composite), de révéler à l'inspection visuelle des impacts révélateurs de l'existence de chocs à basse énergie, inférieure à 30J, (chute d'outils...) ayant pu affecter la structure composite 15, au travers de la déformation de la tresse ou des clinquants métalliques formant l'élément conducteur 12 et la rupture et/ou l'endommagement de la couche protectrice 14,
- Il permet encore de renforcer la capacité d'absorption de l'énergie d'impact transmise lors d'un choc basse énergie, le matériau de la couche d'interface 13 et la structure de l'élément conducteur 12 contribuant à l'absorption de l'énergie d'impact. Un redimensionnement de la pièce structurale 15 support de l'élément conducteur 12 peut ainsi être réalisé de façon à optimiser l'intégration du dispositif 11 dans la structure de sorte que l'on bénéficie d'un gain de masse et d'une facilité d'intégration accrue du dispositif 11 hors ligne d'assemblage.

Le dispositif selon l'invention permet également, de manière avantageuse de conserver une connectique standard pour raccorder l'élément conducteur monté sur la structure considérée aux éléments conducteurs d'autres structures.

Il permet encore de superposer plusieurs conducteurs par la formation de couches superposées de façon à multiplier, dans un seul et même faible volume, le nombre de signaux électriques pouvant être véhiculés et/ou la puissance électrique transportée. De manière analogue, et pour les mêmes raisons, il permet également de juxtaposer plusieurs conducteurs chaque conducteur étant électriquement isolé de son voisin et mécaniquement séparé de ce dernier.

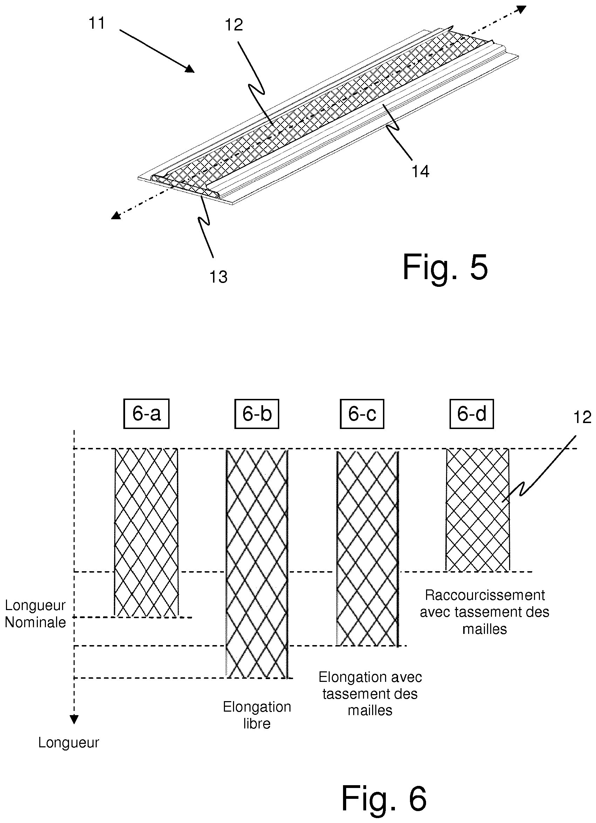

Les figures 5 et 6 illustrent les propriétés mécaniques avantageuses du dispositif selon l'invention au travers d'un exemple de réalisation pour lequel ce dernier comporte une couche d'interface 13, un élément conducteur 12 consistant en une tresse métallique, ainsi qu'une couche de protection 14 constituée par une couche de matériau définissant avec la couche d'interface 13 une cavité longitudinale à l'intérieure de laquelle est placé l'élément conducteur 12. Sur l'illustration de la figure 5, la surface de la couche de protection est partiellement découpée de façon à laisser voir la tresse conductrice 12.

Ainsi positionnée au sein du dispositif 11 dont elle fait partie, la tresse conductrice 12, peut adopter librement une position étirée ou comprimée, sans subir de dommage, la position comprimée ou étirée étant par exemple consécutive du fait des variations de température.

La figure 6, illustre différentes configurations mettant en évidence les avantages du dispositif selon l'invention.

La vue 6-a représente de manière schématique la situation à température ambiante, situation pour laquelle la longueur de la tresse et celle de la structure sont par principe adaptées l'une à l'autre.

La vue 6-b représente une situation pour laquelle la structure 15 et la tresse 12 ont subi une dilatation sous l'action d'un accroissement de la température, la dilatation de la structure 15 selon l'axe de la tresse étant sensiblement égale à la dilatation du matériau constituant la tresse (métal). Dans ce contexte la tresse subit simplement un allongement de sa longueur par élargissement de ses mailles, allongement qui absorbe à lui seul les effets de la dilatation du métal.

La vue 6-c représente une situation pour laquelle la structure 15 et la tresse 12 ont subi une dilatation sous l'action d'un accroissement de la température, la dilatation de la structure 15 selon l'axe de la tresse étant plus faible que la dilatation du matériau constituant la tresse (métal). Dans ce contexte la tresse 12 subit à la fois un allongement de sa longueur qui absorbe partiellement les effets de la dilatation du métal ainsi qu'une compression qui se traduit par un (resserrement des mailles) et qui permet à la tresse 12 d'absorber sans dommage l'écart de dilatation entre le matériau composite constituant la structure 15 et le métal dont elle est constituée. Ce mouvement de resserrement est avantageusement rendu possible par la liberté relative de mouvement dont dispose la tresse 12 à l'intérieur de la structure du dispositif selon l'invention.

La vue 6-d représente une situation pour laquelle la structure 15 et la tresse 12 ont subi une contraction sous l'action d'un abaissement de la température. Dans ce contexte le métal constituant la tresse 12 subit une contraction qui entraine un raccourcissement de sa longueur et/ou une compression qui se traduit par un resserrement des mailles, selon que la contraction du métal de la tresse 12 et celle du matériau composite de la structure 15 ont ou non des valeurs semblables.

Ainsi, grâce à l'utilisation du dispositif selon l'invention, l'élément conducteur 12 se trouve à la fois lié à la structure composite 15 et capable d'adapter ses dimensions aux dilatations et aux contractions consécutives aux variations de température indépendamment des variations subies par la structure elle-même.

Du point de vue de la réalisation, le semi-produit que constitue le dispositif selon l'invention fait l'objet d'un procédé de fabrication comportant principalement les étapes suivantes:
- une première étape de réalisation de la couche d'interface, cette couche, isolante du point de vue électrique, étant réalisée, selon les propriétés mécaniques recherchées, en matériau composite (fibre de verre) ou alternativement en matériau polymère (élastomère, polyamide, ...);
- une deuxième étape d'intégration de l'élément conducteur (tresse ou bandes de clinquant métallique par exemple) sur la couche d'interface;
- une troisième étape de mise en place de la couche de protection, couche qui peut se présenter, selon les propriétés mécaniques recherchées, sous la forme d'une membrane protectrice en matériau polymère ou encore sous la forme d'un pli en matériau composite.

Il est à noter que selon les matériaux utilisés pour former la couche d'interface et la couche de protection couche en matériau composite ou couche en matériau polymère, une opération de polymérisation ou de vulcanisation peut être effectuée à l'issue de la seconde ou de la troisième étape.

Ainsi, comme couche d'interface et la couche de protection sont réalisées en matériau composite, une opération de polymérisation peut être effectuée à l'issue de la troisième étape. Dans ce cas, selon que l'on souhaite conserver au dispositif une structure souple ou non, la polymérisation peut être partielle (prépolymérisation) ou complète.

Ainsi encore, si la couche d'interface et la couche de protection sont réalisées en matériau élastomère, une opération de vulcanisation peut être effectuée à l'issue de la troisième étape.

Ainsi encore, si la couche d'interface est réalisée en matériau composite et la couche de protection en matériau élastomère, une opération de polymérisation peut être effectuée à l'issue de la seconde étape et une opération de vulcanisation peut être effectuée à l'issue de la troisième étape.

Il est à noter également qu'au cours des opérations de polymérisation et/ou de vulcanisation se produisant au cours de la fabrication du dispositif selon l'invention, il peut, dans certains cas, se produire une adhérence superficielle de la couche d'interface 13 et/ou de la couche de protection 14 à l'élément conducteur 12, cette adhérence pouvant limiter de manière préjudiciable la liberté de mouvement de l'élément conducteur 12. Par suite, pour prévenir cette adhérence il est possible d'interposer une couche de séparation empêchant le contact direct de la surface de l'élément conducteur avec les couches d'interface et de protection. Cette couche peut par exemple consister en un film d'un matériau approprié enrobant le conducteur, ou encore en un traitement approprié de la surface de l'élément conducteur.

Il est encore à noter que la troisième étape de mise en place d'une couche de protection peut consister en un traitement de surface de l'élément conducteur, un traitement chimique ou un dépôt d'un vernis de protection à la surface du dispositif en contact avec le milieu extérieur. Dans ce cas, cette dernière étape peut être réalisée lors du montage du dispositif sur la structure en matériau composite 15 considérée.

A l'issue des étapes précédentes, le semi-produit ainsi obtenu peut alors être équipé d'une connectique appropriée.

Le dispositif ainsi réalisé forme une structure conductrice renfermant un élément conducteur enrobé, structure constituant un semi-produit qu'il est possible de stocker et d'utiliser ultérieurement pour la fabrication d'une structure composite intégrant des conducteurs électriques en surface.

La mise en place du dispositif 11 selon l'invention sur la structure composite 15 considérée et sa fixation à ladite structure peuvent être réalisées par différents moyens selon que l'assemblage est effectué au moment de la fabrication de la pièce en matériau composite ou bien après la fabrication.

Ainsi, l'utilisation d'un dispositif 11 dont la couche d'interface 13 est réalisée en matériau composite prépolymérisé permet par exemple d'assembler le dispositif selon l'invention sur la structure en matériau composite 15 considérée en fin de réalisation de cette dernière, la polymérisation complète de la couche d'interface 13 étant alors opérée simultanément à la polymérisation de la structure 15 elle-même. L'opération de polymérisation entraine l'adhésion de la couche d'interface au matériau composite de la structure et assure alors la fixation du dispositif sur la structure.

Cependant, le montage du dispositif selon l'invention sur la structure en matériau composite considérée peut encore être réalisé après fabrication complète séparée des deux éléments et assemblage par tout moyen connu approprié, par exemple par collage du dispositif 11 sur la structure 15 au moyen d'un film de colle.

Il est à noter que la fabrication du dispositif selon l'invention, comprenant la couche d'interface isolante 13, l'élément conducteur 12 (la tresse ou les clinquants) et la couche de protection 14, révélatrice d'impact, ainsi que sa fixation sur la structure en matériau composite 15, font appel à des méthodes connues et éprouvées (par exemple : Injection RTM, polymérisation en étuve, collage, sertissage ....), sans risque industriel (produits courants, procédés très répandus).

Ainsi qu'il ressort de la description précédente, le dispositif selon l'invention peut avantageusement être utilisé dans de nombreux domaines, tels que la construction d'aéronefs (aéronautique, aérospatial), de trains, d'automobile, ou encore tels que le bâtiment, ou la fabrication de boitiers électroniques, pour des applications nécessitant l'intégration de fonctions électriques à une structure non conductrice (passage de signal dans un plastique...).

Il peut être utilisé, en particulier, pour la réalisation d'éléments structuraux ou d'habillage dans les domaines cités précédemment pour remplacer des systèmes existants. Il peut notamment, dans le domaine des structures d'aéronefs, remplacer un réseau ESN ("Electrical Structural Network") classique, constitué d'un ensemble de câbles, pièces métalliques et colliers de fixation, et permet de gagner en masse, en temps d'installation des composants et par suite de cout.

## Revendications

1. Dispositif conducteur (11) pour la mise en place d'une liaison électrique à la surface d'une structure en matériau composite (15), comportant:
- une couche d'interface (13) de faible épaisseur présentant une face par laquelle le dispositif est fixé à la surface de la structure en matériau composite (15);
- un élément métallique conducteur (12), placé sur la face de la couche d'interface (13) opposée à la face en contact avec la surface de la structure (15), ledit élément présentant une longueur importante comparée à sa section, configuré et agencé pour pouvoir subir sans dommage des contraintes de compression et d'extension;
- une couche de protection (14) configurée pour protéger l'élément conducteur (12) des agressions du milieu environnant la structure (15),
**caractérisé en ce que** la couche d'interface (13) est réalisée en matériau composite, la fabrication du dispositif comportant une opération de pré-polymérisation; de sorte que le dispositif (11) se présente en fin de fabrication comme un produit souple semi-fini dont la polymérisation totale peut être réalisée après montage du dispositif (11) sur la structure en matériau composite (15) considérée.

2. Dispositif selon la revendication 1, **caractérisé en ce que** la couche de protection (14) est constituée par une enveloppe recouvrant la partie du dispositif (11) en contact avec le milieu extérieur, ladite enveloppe (14) définissant avec la couche d'interface (13) un espace interne dans lequel l'élément conducteur (12) est logé.

3. Dispositif selon l'une des revendications 1 ou 2, **caractérisé en ce que** la couche de protection (14) est réalisée en matériau composite de façon à présenter, en cas d'impact de basse énergie, une déformation visible par un observateur dans la zone de l'impact.

4. Dispositif selon l'une quelconque des revendications précédentes, **caractérisé en ce que** l'élément conducteur (12) est une tresse métallique.

5. Dispositif selon l'une quelconque des revendications 1 à 3, **caractérisé en ce que** l'élément conducteur (12) est ensemble de lames de matériau clinquant superposées.

## Patentansprüche

1. Leitende Vorrichtung (11) zur Herstellung einer elektrischen Verbindung an der Oberfläche einer Struktur aus Verbundmaterial (15), aufweisend:
- eine Grenzflächenschicht (13) geringer Dicke mit einer Seite, über welche die Vorrichtung an der Oberfläche der Struktur aus Verbundmaterial (15) befestigt ist;
- ein leitendes Metallelement (12), das auf der Seite der Grenzflächenschicht (13) platziert ist, die der Seite gegenüberliegt, die mit der Oberfläche der Struktur (15) in Kontakt steht, wobei das Element, das eine bedeutende Länge im Vergleich zu seinem Querschnitt aufweist, dazu ausgebildet und angeordnet ist, Kompressions- und Dehnungsbeanspruchungen ohne Schäden erfahren zu können;
- eine Schutzschicht (14), die dazu ausgebildet ist, das leitende Element (12) vor den Angriffen des Milieus zu schützen, das die Struktur (15) umgibt,
**dadurch gekennzeichnet, dass** die Grenzflächenschicht (13) aus Verbundmaterial hergestellt ist, wobei die Fertigung der Vorrichtung einen Vorpolimerisierungsvorgang aufweist; so dass die Vorrichtung (11) am Ende der Fertigung als ein biegsames Halbfabrikat vorliegt, dessen vollständige Polymerisation nach der Montage der Vorrichtung (11) auf der betrachteten Struktur aus Verbundmaterial (15) durchgeführt werden kann.

2. Vorrichtung nach Anspruch 1, **dadurch gekennzeichnet, dass** die Schutzschicht (14) von einer Hülle gebildet ist, die den Abschnitt der Vorrichtung (11) abdeckt, der mit der Außenumgebung in Kontakt steht, wobei die Hülle (14) mit der Grenzflächenschicht (13) einen Innenraum definiert, in dem das leitende Element (12) aufgenommen ist.

3. Vorrichtung nach einem der Ansprüche 1 oder 2, **dadurch gekennzeichnet, dass** die Schutzschicht (14) aus Verbundmaterial hergestellt ist, so dass sie bei einem Niedrigenergieaufprall eine Verformung aufweist, die für einen Betrachter im Bereich des Aufpralls sichtbar ist.

4. Vorrichtung nach einem der vorhergehenden Ansprüche, **dadurch gekennzeichnet, dass** das leitende Element (12) eine Metallumflechtung ist.

5. Vorrichtung nach einem der Ansprüche 1 bis 3, **dadurch gekennzeichnet, dass** das leitende Element (12) Anordnung von übereinander gelagerten Lamellen aus Folienmaterial ist.

## Claims

1. Conducting device (11) for installing an electrical link on the surface of a composite material structure (15), comprising:
- an interface layer (13) of small thickness exhibiting a face by which the device is fixed to the surface of the composite material structure (15) ;
- a conducting metallic element (12), placed on the face of the interface layer (13) opposite to the face in contact with the surface of the structure (15), said element having a length that is significant compared with its cross section and being configured so as to be able to undergo compressive and extensile stresses without damage;
- a protective layer (14) configured to protect the conducting element (12) from the attacks of the medium surrounding the structure (15);
**characterized in that** the interface layer (13) is made of composite material, the fabrication of the device comprising a pre-polymerization operation, so that at the end of fabrication the device (11) takes the form of a semi-finished flexible product the total polymerization of which can be carried out after the mounting of the device (11) on the composite material structure (15) considered.

2. Device according to Claim 1, **characterized in that** the protective layer (14) consists of an envelope covering the portion of the device (11) in contact with the exterior medium, said envelope (14) defining with the interface layer (13) an internal space in which the conducting element (12) is housed.

3. Device according to one of Claims 1 or 2, **characterized in that** the protective layer (14) is made of composite material so as to exhibit, in case of low-energy impact, a deformation visible by an observer in the zone of the impact.

4. Device according to any one of the preceding claims, **characterized in that** the conducting element (12) is a metallic braid.

5. Device according to any one of Claims 1 to 3, **characterized in that** the conducting element (12) is a set of superposed leaves of foil material.
